# EUROPEAN PATENT APPLICATION

(11) **EP 4 607 966 A1**
(43) Date of publication of application: **27.08.2025**
(21) Application number: 24386019.4
(22) Date of filing: 22.02.2024
(51) Int. Cl.: H04S 7/00, A63F 13/00

(54) **APPARATUS AND METHOD OF SPATIAL SOUND PRODUCTION**

(71) Applicant: Sony Interactive Entertainment Inc., Tokyo 108-0075 (JP)
(72) Inventor: HENDERSON, Christopher, London W1F 7LP (GB); MICHAILIDIS, Lazaros, London W1F 7LP (GB); LUCAS BARCIAS, Jesus, London W1F 7LP (GB)
(74) Representative: D Young & Co LLP

(57) **Abstract**

A method of spatial sound output comprises obtaining a distance between one or more fixed loudspeakers and a user, obtaining a distance between at least a first hand-held loudspeaker and the user, and outputting corresponding audio signals for one or more of the fixed loudspeakers and for the at least first hand-held loudspeaker at respective times both preceding a timing for an equivalent stereo signal for the fixed loudspeakers, wherein the respective times are selected to cause the resulting audio to reach the user substantially simultaneously from at least one fixed loudspeaker and from the at least first hand-held loudspeaker, and to be consistent with the audio being located at a predetermined spatial position between these loudspeakers.

## Description

The present invention relates to an apparatus and method of spatial sound production.

Spatial sound - that is, sound with an apparent source position not limited to just a left/right stereo position, but also potentially up and down and/or fore and aft - is popular for providing increased immersion in films and videogames. However, providing such spatial sound can require complex loudspeaker systems, or the use of specialist headphones.

Embodiments of the present invention seek to alleviate or mitigate this problem.

### SUMMARY OF THE INVENTION

Various aspects and features of the present invention are defined in the appended claims and within the text of the accompanying description.

In a first aspect, a method of spatial sound output is provided in accordance with claim 1.

In another aspect, a spatial sound apparatus is provided in accordance with claim 11.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
- Figure 1 is a schematic diagram of a system comprising a spatial sound apparatus in accordance with embodiments of the present description.
- Figure 2 is a schematic diagram of fixed and handheld loudspeakers in accordance with embodiments of the present description.
- Figure 3 is a flow diagram of a method of spatial sound output in accordance with embodiments of the present description.

### DESCRIPTION OF THE EMBODIMENTS

An apparatus and method of spatial sound production are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

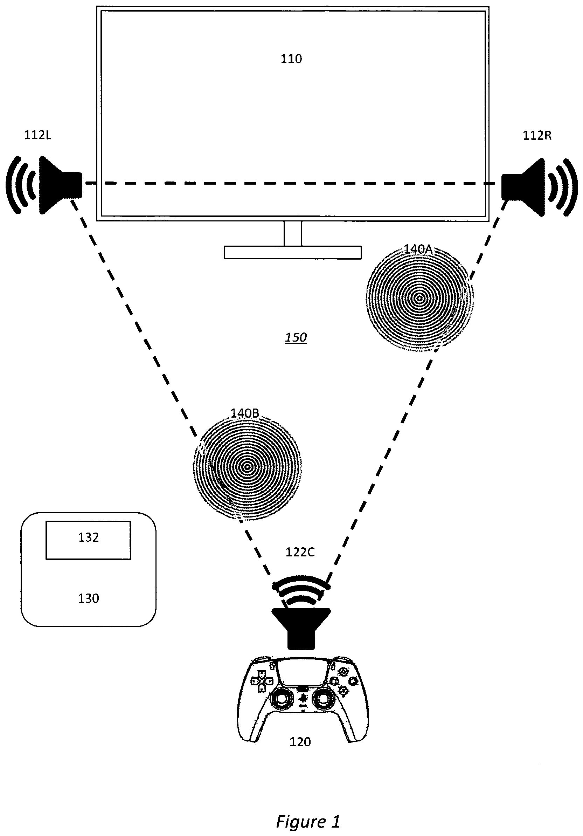

Referring now to the drawings, wherein like reference numerals designate identical or corresponding parts throughout the several views, in Figure 1 a TV 110 comprises at least two speakers 112L, 112R, capable of stereo reproduction of a suitable sound source.

The sound source (and any associated imagery) may be received from a broadcast signal, or a streaming server (for example in the form of a so-called cloud-gaming service), or may be produced locally for example by a computer or videogame console 130 (which may also receive such broadcasts or streams for the TV).

In addition, a controller 120 is provided, that enables some form of interactivity with the content. This may be as limited as controlling playback and navigation for example in the case of pre-recorded content, but more typically will provide inputs that affect the state of a game, with changes in state affecting the imagery and typically also the audio of the game as output to the TV.

The controller also includes a loudspeaker 122C.

In embodiments of the present description, the controller loudspeaker 122C is provided with audio signals that, in conjunction with the audio signals from the television speakers, provide a spatial sense of sound source localisation at least within a triangle 150 defined by the three speakers, and denoted by the dotted lines in Figure 1.

The audio signals provided to the controller loudspeaker 122C (for example via Bluetooth^{®} or Wifi^{®} from the console or TV, as appropriate) can be timed so that the relative delay / phasing of the audio at the user's ears, from the or each TV speaker 112L,R and the controller speaker, is consistent with a specific location within the triangle 150.

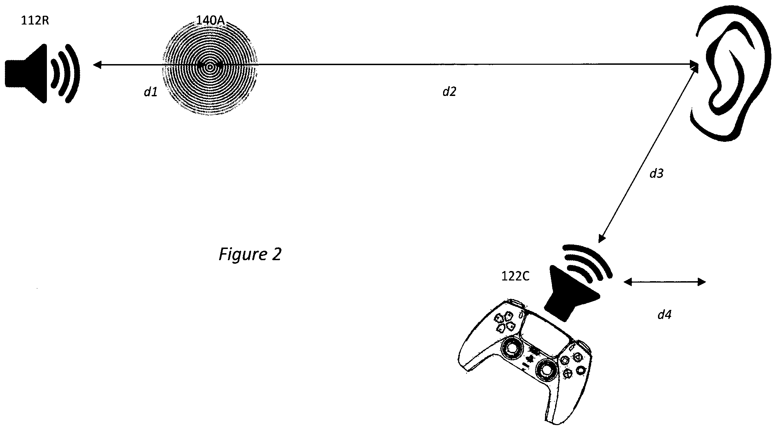

Hence for example, and referring now also to Figure 2, virtual sound source 140A would be predominantly from the TV's right speaker 112R rather than the left speaker, and be generated in conjunction with controller speaker 122C as follows.

The acoustic path length from the virtual sound source position to the user's ear is *d2*. The path length from the controller speaker is *d3.* Meanwhile the path length from the TV's right speaker is *d1+d2.*

Denoting the time of flight for audio on each path length to the user's ear as *t(d1), t(d2),* and *t(d3),* then compared to a conventional output from the TV right speaker at a time t0, which would reach the user's ear at time t(d1+d2), in embodiments of the description the TV right speaker outputs the sound at *t*(*-d1*), and the controller speaker outputs its sound at *t(d3-d2).*

In this way, the combined sounds, received at the user's ear from the TV right speaker and the controller speaker at substantially the same time, are consistent with a sound source located at the distance *d2* of virtual sound source 140A. As such this provides a depth or z-axis positioning of the sound as perceived by the user.

With a complementary output from the TV left speaker and a corresponding additional signal (potentially overlapping the first signal) at the controller speaker, the timings of these four signals (one for each of the stereo speakers and a corresponding one each at the controller speaker) can be chosen to be consistent with a sound source at a preferred positon within triangle 150.

Optionally the controller may receive only one audio signal, which may be a pre-combined version of the two signals mentioned above. Alternatively the controller may receive for example one audio signal with a timing corresponding to t(*d*3-*̅d̅*̅2̅), where *̅d̅*̅2̅ is the average of the respective d2 values for the left and right TV speakers, and the sound corresponds to an average of the two speakers or that of the louder speaker, or alternatively with a timing corresponding to *t(d3-d2)* where d2 is that of the louder of the TV speakers for that sound.

Whilst reference has been made only to one controller, it will be appreciated that a user may have two controllers (e.g. one per hand), and these may each have a loudspeaker. In this case the principle for each controller loudspeaker is the same based on its respective position, and the resulting spatial area 150 becomes truncated triangle or trapezoid.

For a typical use case one can assume the user is between 2 and 3 metres from their TV. As a result the longest time of flight is in the order of 6 to 9 milliseconds, corresponding in turn to an image frame rate of around 160 to 110 frames per second. Hence the pre-emptive changes in audio output timing to position a virtual sound within triangle 150 - e.g. *t(-d1)* and *t(d3-d2),* will typically be comfortably within the period of time take to generate of a current image frame for a typical 60Hz video output, and so the audio signals can be output slightly early to achieve this with very little alteration of process; in particular, the game state for the current image frame (which will likely also be determinant for any audio generation) can still be used even if the apparent change in path length places the virtual sound position close to the user, and hence requires most of that 6 to 9 millisecond advance period.

The result is that the user can perceive certain audio sources being closer to them than others during game play with little or no game lag being necessary, creating a sense of depth without the need for complex room-speaker arrangements.

In particular, for example, sounds associated with a user's weapon, which is typically perceived as closer to the user than other in-game elements, may be output by the television and controller speakers so as to appear closer to the user. Similarly audio for non-player characters may be brought in front of the TV if they come closer to the user during dialog sessions. Other uses will be apparent to the skilled person.

The above technique may assume a position of the user's ear based upon how a typical user would hold the controller - e.g. in particular the distance *d3* may be assumed.

Optionally the distance of the user from their TV (or more precisely, the stereo speakers being driven by the TV, which may be physically separate) can also be inferred from the controller; in embodiments of the present description, the controller comprises a microphone. The TV 110 or console 130 can generate audio for the TV speakers, and receive a copy of that audio from the controller microphone. From this a relative timing and hence distance can be determined between a TV speaker and the controller (e.g. using autocorrelation of the source and received signals). The distance from the TV speaker and the user's ear is then this distance plus *d4*, which again can be assumed from how a typical user holds the controller.

Similarly optionally the system could perform a brief calibration step, with the user touching the controller to their forehead; in one instance, the path delay for sound at that moment could directly provide the distance between the user's head and the TV speaker(s), based on the sound picked up from the controller microphone in the manner described above. Alternatively or in addition, motion sensors within the controller can be used to determine the controller's subsequent position relative to the user's forehead, and the path delay for a later sound at the controller's current position could be used to determine the distance to the user's head based on the distance between the TV speaker(s) and the controller, plus the relative position of the controller and the user's head.

Similarly optionally, the user's head and the controller could be monitored by a camera (not shown). The distance to the controller from the camera could be determined by its size within the image, as it is an object of known size. Alternatively or in addition, the size of a light bar on the controller could similarly be used to be more robust in various low lighting conditions. Again the distance to the user's head could be based on this information plus distance d4, or a distance based on motion tracking of the controller, or based on a calibration e.g. again touching the controller to the user's forehead to get a size comparison (and optionally a direct distance measure as explained previously). In this case, optionally the calibration would only be needed once, since after the user's head size is known, distance can be visually estimated based on head size in camera images without re-calibration. In the case of the camera, its position relative to the speakers would also need to be known. It could for example be assumed to be on the same depth plane and equidistant between the speakers if the user is face-on and centred in the captured image.

Finally alternatively or in addition, the user can input distances from the TV speakers to a preferred playing position manually, e.g. via a suitable user interface.

In any event, the distances to the user's head and to the controller can be estimated, input, measured, or otherwise obtained, and these distances can be used to generate spatially positioned virtual sound sources such as 140A and 140B of Figure 1 in the manner described previously herein.

In an embodiment of the present description, it will be appreciated that the above scheme can generate spatially positioned virtual sound sources such as 140A and 140B of Figure 1, based on the relative positions of the TV speaker(s), the controller speaker, and the user.

However, of these, both the controller speaker, and the user, can move during play.

Accordingly, the motion sensors of the controller mentioned previously can also be used to update distance *d3* if and when the user moves the controller around. In this way, the timings of sounds from the controller speaker can be changed responsive to changes in position of the controller so that the absolute position of the virtual sound source stays the same even as the shape of the triangle 150 is modified by the movement of the controller.

Clearly also where the controller is used to infer the position of the user, movements of the controller can be used to update the distance d2 as well using the assumed or calibrated relationship between controller and user position discussed previously herein.

The types of motion of the controller tend to differ between arm-based movements and whole-body movements of the user. Arm-based movements tend to be predominantly vertical or lateral together with some rotation of the controller. By contrast, whole body movements of the controller tend to be depth based (forward or back), or lateral without similar levels of rotation. Similarly also rotation (rocking) of the controller caused by holding it in two hands and moving those hands left or right provides a central position where arm position is roughly equal / mirrored; if this central position moves, then this infers a whole-body movement of the user. Hence motions that correspond to a change in *d3* can generally be distinguished from motions that alternatively or in addition correspond to a change in *d2*, and estimates of these distances to the controller and the user can be updated accordingly.

Clearly also if the controller and user are being monitored by a camera as described previously, then movements of the controller and/or the user can be tracked directly from the captured images.

In either case, the timings of sounds from the controller speaker can be changed responsive to changes in position of the controller and/or the user so that the absolute position of the virtual sound source stays the same even as the controller and/or the user moves, at least within a predetermined range (e.g. 1 or 2 metres).

It will be appreciated that in some cases sound sources may fall outside the triangle if it changes a lot; for example if for Figure 1 the user moves sufficiently far to the right, the position of virtual sound source 140B may fall outside the triangle. In this case, the virtual sound source can still be maintained at the edge of the current triangle at a consistent distance from the TV, so that there is no sudden change in depth placement of the sound as would occur if it dropped back to stereo only.

However, optionally sounds that fall outside the triangle either because the user moves, or because the virtual sound source moves, can be transitioned back to stereo or to a wider surround sound system, if available. For example, the volume output by the controller speaker may be reduced as a function of how far outside the triangle 150 the sound is currently located, so that the sound fades back into stereo / surround at that point.

Similarly optionally, the above techniques may be restricted to sounds that are unlikely to fall outside the triangle whilst they occur, such as sounds associated with the user's weapon, spell casts, or other interactions such as with doors or objects, or dialogs with NPCs.

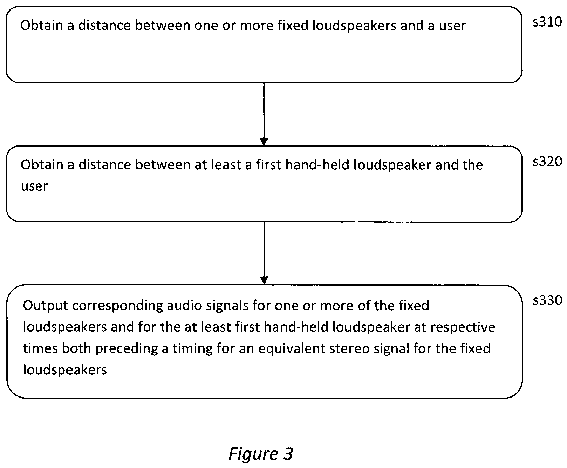

Referring now to Figure 3, in a summary embodiment of the present description, a method of spatial sound output comprises the following steps.

In a first step s310, obtaining a distance between one or more fixed loudspeakers and a user, as discussed elsewhere herein.

In a second step s320, obtaining a distance between at least a first hand-held loudspeaker and the user, as discussed elsewhere herein.

In a third step s330, outputting corresponding audio signals for one or more of the fixed loudspeakers and for the at least first hand-held loudspeaker at respective times both preceding a timing for an equivalent stereo signal for the fixed loudspeakers, as discussed elsewhere herein;
Wherein the respective times are selected to cause the resulting audio to reach the user substantially simultaneously from at least one fixed loudspeaker and from the at least first hand-held loudspeaker, and to be consistent with the audio being located at a predetermined spatial position between these loudspeakers, as discussed elsewhere herein.

It will be apparent to a person skilled in the art that variations in the above method corresponding to operation of the various embodiments of the apparatus as described and claimed herein are considered within the scope of the present invention, including but not limited to that:
- the respective time for a fixed loudspeaker precedes a time for an equivalent stereo signal by a period equivalent to the time of flight of audio from the fixed loudspeaker to the predetermined spatial position, as discussed elsewhere herein;
- the respective time for the at least first hand-held loudspeaker precedes a time for an equivalent stereo signal by a period equivalent to the time of flight of audio from the at least first hand-held loudspeaker to the user minus the time of flight of audio from the predetermined spatial position to the user, as discussed elsewhere herein;
- the method comprises the step of estimating the distance of the at least first hand-held loudspeaker from at least one fixed loudspeaker based on a measured time of flight of audio from the at least one fixed loudspeaker to a microphone proximate to the at least first hand-held loudspeaker, as discussed elsewhere herein;
   - in this instance, optionally the step further comprises the step of estimating the position of the user's head relative to the at least first hand-held loudspeaker based on one or more selected from the list consisting of an assumed relationship between the position of the at least first hand-held loudspeaker and the user's head in normal use of the at least first hand-held loudspeaker, and a measure of displacement between the position of the at least first hand-held loudspeaker and the user's head based on signals from a motion sensor proximate to the at least first hand-held loudspeaker, after holding this to the user's head, as discussed elsewhere herein;
- the method comprises the step of estimating the position of the at least first hand-held loudspeaker relative to a camera, the camera being in a known positional relationship to the at least one fixed loudspeaker, based on a known size of an apparatus housing the at least first hand-held loudspeaker and the apparent size and position of that apparatus in a captured image of the camera, as discussed elsewhere herein;
- in this instance, optionally the step further comprises the step of estimating the position of the user's head relative to the camera based on a known size of the user's head and the apparent size and position of the head in a captured image of the camera, the size of the user's head being obtained by comparison with the known size of the apparatus housing the at least first hand-held loudspeaker, as discussed elsewhere herein;
- the method comprises the steps of tracking the position of the at least first hand-held loudspeaker, and adjusting the respective times outputting corresponding audio signals responsive to the tracked position of the at least first hand-held loudspeaker to maintain the absolute position of the predetermined spatial position between the loudspeakers, as discussed elsewhere herein; and
- the at least first hand-held loudspeaker is housed in a videogame controller apparatus, as discussed elsewhere herein.

It will be appreciated that the above methods may be carried out on hardware suitably adapted as applicable by software instruction or by the inclusion or substitution of dedicated hardware.

Thus the required adaptation to existing parts of an equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

Accordingly, in a summary embodiment of the description, a spatial sound apparatus comprises the following.
an audio processor 132 configured to obtain (for example by suitable software instruction) a distance between one or more fixed loudspeakers and a user, and a distance between at least a first hand-held loudspeaker and the user, as discussed elsewhere herein.

The audio processor is also configured to output (for example via wired or wireless signals) corresponding audio signals for one or more of the fixed loudspeakers and for the at least first hand-held loudspeaker at respective times, which both precede a timing for an equivalent stereo signal for the fixed loudspeakers, wherein the respective times are selected by the audio processor to cause the resulting audio to reach the user substantially simultaneously from at least one fixed loudspeaker and the at least first hand-held loudspeaker, and to be consistent with the audio being located at a spatial position between these loudspeakers, as discussed elsewhere herein.

Instances of this summary embodiment implementing the methods and techniques described herein (for example by use of suitable software instruction) are envisaged within the scope of the application, including but not limited to that:
- the respective time for a fixed loudspeaker precedes a time for an equivalent stereo signal by a period equivalent to the time of flight of audio from the fixed loudspeaker to the predetermined spatial position, as discussed elsewhere herein; and
- the respective time for the at least first hand-held loudspeaker precedes a time for an equivalent stereo signal by a period equivalent to the time of flight of audio from the at least first hand-held loudspeaker to the user minus the time of flight of audio from the predetermined spatial position to the user, as discussed elsewhere herein.

Furthermore, a videogame console 130 may comprising the spatial sound apparatus, and a system may comprise the videogame console 130 and at least a first videogame controller 120 comprising a hand-held loudspeaker 122C.

In this case, optionally the at least first videogame controller comprises a motion tracker, and the spatial sound apparatus comprises a tracking processor configured to track the position of the at least first hand-held loudspeaker; meanwhile, the audio processor is configured to adjust the respective times outputting corresponding audio signals responsive to the tracked position of the at least first hand-held loudspeaker to maintain the absolute position of the predetermined spatial position between the loudspeakers.

The foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. A method of spatial sound output, comprising:
obtaining a distance between one or more fixed loudspeakers and a user;
obtaining a distance between at least a first hand-held loudspeaker and the user; and
outputting corresponding audio signals for one or more of the fixed loudspeakers and for the at least first hand-held loudspeaker at respective times both preceding a timing for an equivalent stereo signal for the fixed loudspeakers; wherein
the respective times are selected to cause the resulting audio to reach the user substantially simultaneously from at least one fixed loudspeaker and from the at least first hand-held loudspeaker, and to be consistent with the audio being located at a predetermined spatial position between these loudspeakers.

2. A method according to claim 1, in which
the respective time for a fixed loudspeaker precedes a time for an equivalent stereo signal by a period equivalent to the time of flight of audio from the fixed loudspeaker to the predetermined spatial position.

3. A method according to claim 1 or claim 2, in which
the respective time for the at least first hand-held loudspeaker precedes a time for an equivalent stereo signal by a period equivalent to the time of flight of audio from the at least first hand-held loudspeaker to the user minus the time of flight of audio from the predetermined spatial position to the user.

4. A method according to any preceding claim, comprising the step of:
estimating the distance of the at least first hand-held loudspeaker from at least one fixed loudspeaker based on a measured time of flight of audio from the at least one fixed loudspeaker to a microphone proximate to the at least first hand-held loudspeaker.

5. A method according to claim 4 comprising the step of:
estimating the position of the user's head relative to the at least first hand-held loudspeaker based on one or more selected from the list consisting of:
i. an assumed relationship between the position of the at least first hand-held loudspeaker and the user's head in normal use of the at least first hand-held loudspeaker; and
ii. a measure of displacement between the position of the at least first hand-held loudspeaker and the user's head based on signals from a motion sensor proximate to the at least first hand-held loudspeaker, after holding this to the user's head.

6. A method according to any preceding claim, comprising the step of:
estimating the position of the at least first hand-held loudspeaker relative to a camera, the camera being in a known positional relationship to the at least one fixed loudspeaker, based on a known size of an apparatus housing the at least first hand-held loudspeaker and the apparent size and position of that apparatus in a captured image of the camera.

7. A method according to claim 6 comprising the step of:
estimating the position of the user's head relative to the camera based on a known size of the user's head and the apparent size and position of the head in a captured image of the camera, the size of the user's head being obtained by comparison with the known size of the apparatus housing the at least first hand-held loudspeaker.

8. A method according to any preceding claim, comprising the steps of:
tracking the position of the at least first hand-held loudspeaker; and
adjusting the respective times outputting corresponding audio signals responsive to the tracked position of the at least first hand-held loudspeakerto maintain the absolute position of the predetermined spatial position between the loudspeakers.

9. A method according to any preceding claim, in which
the at least first hand-held loudspeaker is housed in a videogame controller apparatus.

10. A computer program comprising computer executable instructions adapted to cause a computer system to perform the method of any one of the preceding claims.

11. A spatial sound apparatus, comprising:
an audio processor configured to obtain
a distance between one or more fixed loudspeakers and a user, and
a distance between at least a first hand-held loudspeaker and the user;
output corresponding audio signals for one or more of the fixed loudspeakers and for the at least first hand-held loudspeaker at respective times both preceding a timing for an equivalent stereo signal for the fixed loudspeakers, wherein:
the respective times are selected by the audio processor to cause the resulting audio to reach the user substantially simultaneously from at least one fixed loudspeaker and the at least first hand-held loudspeaker, and to be consistent with the audio being located at a spatial position between these loudspeakers.

12. The spatial sound apparatus of claim 11, in which
the respective time for a fixed loudspeaker precedes a time for an equivalent stereo signal by a period equivalent to the time of flight of audio from the fixed loudspeaker to the predetermined spatial position; and
the respective time for the at least first hand-held loudspeaker precedes a time for an equivalent stereo signal by a period equivalent to the time of flight of audio from the at least first hand-held loudspeaker to the user minus the time of flight of audio from the predetermined spatial position to the user.

13. A videogame console comprising the spatial sound apparatus of claim 11.

14. A system, comprising the videogame console of claim 12, and
at least a first videogame controller comprising a hand-held loudspeaker.

15. The system of claim 14, in which
The at least first videogame controller comprises a motion tracker; and
the spatial sound apparatus comprises a tracking processor configured to track the position of the at least first hand-held loudspeaker; and
the audio processor is configured to adjust the respective times outputting corresponding audio signals responsive to the tracked position of the at least first hand-held loudspeaker to maintain the absolute position of the predetermined spatial position between the loudspeakers.
